# EUROPÄISCHE PATENTSCHRIFT

(11) **EP 1 301 751 B1**
(45) Veröffentlichungstag und Bekanntmachung des Hinweises auf die Patenterteilung: **04.08.2010**
(21) Anmeldenummer: 01956281.8
(22) Anmeldetag: 19.06.2001
(51) Int. Cl.: G01B 9/02, A61B 3/12, A61B 5/00, G01N 21/45

(54) **NIEDERKOHÄRENZ-INTERFEROMETRISCHES GERÄT ZUR TIEFENABTASTUNG EINES OBJEKTES**
LOW-COHERENCE INTERFEROMETRIC DEVICE FOR DEPTH SCANNING AN OBJECT
DISPOSITIF INTERFEROMETRIQUE A COURTE COHERENCE PERMETTANT DE DETERMINER LA PROFONDEUR D'UN OBJET

(30) Priorität: 07.07.2000 DE 10033189
(43) Veröffentlichungstag der Anmeldung: 16.04.2003
(73) Patentinhaber: Knüttel, Alexander, 69488 Birkenau (DE)
(72) Erfinder: Knüttel, Alexander, 69488 Birkenau (DE)
(74) Vertreter: Pfeifer, Hans-Peter
(86) Internationale Anmeldenummer: PCT/DE2001/002306
(87) Internationale Veröffentlichungsnummer: WO 2002/004884

(56) Entgegenhaltungen:
- DE-A- 19 504 189
- DE-A- 19 520 305
- US-A- 4 869 593
- SCHMITT J M: "COMPACT IN-LINE INTERFEROMETER FOR LOW-COHERENCE REFLECTOMETRY" OPTICS LETTERS, OPTICAL SOCIETY OF AMERICA, WASHINGTON, US, Bd. 20, Nr. 4, 15. Februar 1995 (1995-02-15), Seiten 419-421, XP000491043 ISSN: 0146-9592 in der Anmeldung erwähnt

## Beschreibung

Die Erfindung betrifft ein Niederkohärenz-interferometrisches Gerät zur lichtoptischen Tiefenabtastung eines vor einer Meßöffnung des Gerätes positionierten Objektes durch Detektion der Position von lichtremittierenden Stellen, die in unterschiedlichen Meßtiefen innerhalb des Objektes längs einer in das Objekt hinein in einer Abtastrichtung verlaufenden Abtaststrecke lokalisiert sind.

Derartige Niederkohärenz-interferometrische Verfahren werden zur Untersuchung unterschiedlicher Objekte eingesetzt. Sie werden nachfolgend als LCDS(Low Coherence Depth Scan)-Verfahren bezeichnet. Bei manchen Anwendungsfällen ist es ausreichend, das Objekt eindimensional zu untersuchen, also ausschließlich auf einer bestimmten Abtaststrecke, die sich in die Tiefe des Objektes erstreckt, Informationen über reflektierende Strukturen zu gewinnen. In solchen Fällen genügt die reine Tiefenabtastung ("depth scan" oder "longitudinal scan"). In der Mehrzahl der Anwendungsfälle geht es jedoch darum, durch eine zusätzliche laterale Abtastung (lateral scan) eine Information über reflektierende Strukturen in einer Ebene, die sich in das Objekt hinein erstreckt, oder sogar über einen Volumenausschnitt zu gewinnen. Dies erfordert eine zwei- bzw. dreidimensionale Abtastung, die im einfachsten Fall dadurch realisiert wird, daß das Interferometer auf der Oberfläche in kleinen Schritten ein- bzw. zweidimensional lateral verschoben wird. Solche Verfahren ermöglichen eine mehrdimensionale Bilddarstellung und werden üblicherweise als OCT(Optical Coherence Tomography)-Verfahren bezeichnet. Die Erfindung ist insbesondere für OCT-Verfahren geeignet.

Auf medizinischem Gebiet werden LCDS-Verfahren (einschließlich OCT) vor allem im Zusammenhang mit der Untersuchung des oberflächennahen Bereichs gut zugänglicher Körperteile (Augen, Haut, Nägel) diskutiert. Ein sehr interessantes Einsatzgebiet ist die Endoskopie beispielsweise der Bronchien oder des Magen-Darm-Traktes, wobei dies jedoch eine extreme Miniaturisierung des Gerätes voraussetzt. Im nicht-medizinischen Bereich ist das Vermessen unterschiedlicher semitransparenter streuender Objekte (beispielsweise Kunststoff- oder Keramikschichten) von Interesse.

Gemeinsam ist allen LCDS-Verfahren, daß Licht einer niederkohärenten (spektral breitbandig emittierenden) Lichtquelle in zwei Teilstrahlen, nämlich einen Meßlichtstrahl, der in die Probe eindringt, und einen Referenzlichtstrahl, aufgeteilt wird und die beiden Teilstrahlen vor dem Auftreffen auf einem Detektor derartig zusammengeführt werden, daß ein Interferenzsignal entsteht. Zu diesem Zweck enthält das Gerät eine Interferometer-Anordnung, die außer der niederkohärenten Lichtquelle einen Strahlteiler, einen Referenzreflektor und den Detektor umfaßt. Die Lichtwege zwischen diesen Elementen bilden sogenannte Interferometerarme. Das Licht der Lichtquelle gelangt durch den Lichtquellenarm zu dem Strahlteiler und wird dort aufgeteilt. Ein erster Lichtanteil wird als Meßlicht über einen Objektarm in die Probe eingestrahlt, während ein zweiter Lichtanteil als Referenzlicht über einen Reflektorarm zu dem Referenzreflektor gelangt. Beide Lichtanteile werden reflektiert (das Meßlicht an lichtremittierenden Stellen (light reflecting site) in dem Untersuchungsobjekt, das Referenzlicht an dem Referenzreflektor) und auf dem jeweils gleichen Lichtweg (Objektarm bzw. Referenzarm) zu dem Strahlteiler zurückgeführt. Dort werden sie zusammengefaßt und über einen Detektorarm dem Detektor zugeführt, an dessen lichtempfindlicher Oberfläche infolge der Interferenz der beiden Teilstrahlen ein Interferenzsignal meßbar ist.

Voraussetzung für das Auftreten von Interferenz ist dabei, daß sich die optische Lichtweglänge in dem Referenzarm (von dem Strahlteiler bis zu dem Referenzreflektor) maximal um die Kohärenzlänge der Lichtquelle von der optischen Weglänge unterscheidet, die das Meßlicht zwischen dem Strahlteiler und der jeweiligen Reflexionsstelle in dem Untersuchungsobjekt zurücklegt. Nur wenn diese Bedingung erfüllt ist, wird ein Interferenzsignal gemessen.

Das LCDS-Verfahren wird benutzt, um Strukturen im Inneren streuender Objekte zu untersuchen. Durch Veränderung der Relation der Längen des Referenzarmes und des Objektarmes kann man längs einer Abtaststrecke, die sich in der Abtastrichtung in das Untersuchungsobjekt hinein erstreckt, unterschiedliche "LCDS-Meßtiefen" einstellen, für die die vorstehend erläuterte Interferenzbedingung erfüllt ist. Die Länge des Referenzlichtweges definiert somit, welche Stelle in dem Objekt interferometrisch untersucht wird. Die aktuelle interferometrische Meßposition ist jeweils die Position im Meßstrahlengang, für die die optische Länge des Meßlichtweges von der Strahlteilung bis zur Strahlzusammenführung gleich ist der optischen Länge des Referenzlichtweges von der Strahlteilung bis zu der Strahlzusammenführung. Da die Länge des Referenzlichtweges bei einem gegebenen Gerät bekannt ist, läßt sich die Länge des Meßlichtweges bis zu der lichtremittierenden Stelle, die nachfolgend als "Reflexionsstelle (reflection site)" bezeichnet wird, bestimmen.

In der Regel wird die LCDS-Meßtiefe dadurch eingestellt, daß der Referenzspiegel in Richtung des Referenzstrahles verschoben und dadurch der Referenzlichtweg verkürzt oder verlängert wird. Dabei bestimmt die Position des Referenzspiegels die LCDS-Meßtiefe im Objektinnern (also die aktuelle Untersuchungsposition). Die Stärke des Interferenzsignals (das beispielsweise durch A/D-Wandlung und nachfolgende Gleichrichtung aufbereitet wird) ist ein Maß für die Stärke der Lichtreflexion an der Reflexionsstelle in der LCDS-Meßtiefe.

Nähere Einzelheiten über unterschiedliche vorbekannte LCDS-Geräte sind der einschlägigen Literatur zu entnehmen. Hierzu gehören folgende Publikationen:
1) WO 95/33971
2) J.M. Schmitt "Compact in-line interferometer for low-coherence reflectometry"
3) US-Patent 5,847,827
4) WO 97/27468
5) US-Patent 5,579,112
6) DE 195 04 189

Die maximale Auflösung von LCDS-Geräten in Abtastrichtung (Z-Richtung) entspricht der Kohärenzlänge des verwendeten Meßlichtes. Sie beträgt bei geeigneten Lichtquellen (beispielsweise Superlumineszenzdioden) etwa 10 µm, so daß auch die erreichbare Auflösung in Z-Richtung bei etwa 10 µm liegt. Eine vergleichbare Auflösung in lateraler Richtung (X- und Y-Richtung) läßt sich nur erreichen, wenn das Meßlicht fokussiert wird. In den Zitaten 2) bis 4) wird eine optische Fokussierung mittels einer Sammellinse beschrieben. In dem Zitat 5) soll die erforderliche Fokussierung mit elektronischen Mitteln gewährleistet werden. Die Fokussierung des Meßlichtes ist nicht nur hinsichtlich der lateralen Auflösung vorteilhaft, sondern führt auch zu einer Erhöhung der gemessenen Intensität, weil das Licht über einen größeren Raumwinkel eingestrahlt und das in einen größeren Raumwinkel detektierte Licht gemessen werden kann. Diese Wirkung ist umso besser, je größer die numerische Apertur der fokussierenden Optik ist.

Mit der Verwendung einer fokussierenden Optik bei LCDS- und insbesondere bei OCT-Verfahren ist ein grundlegendes Problem verbunden. Da sich bei der Tiefenabtastung die LCDS-Meßtiefe ständig ändert, ist es erforderlich, die Fokussierungsoptik so auszubilden, daß die Fokustiefe zu jedem Zeitpunkt mit der LCDS-Meßtiefe übereinstimmt ("Fokus-Nachführung"). Dies läßt sich prinzipiell dadurch erreichen, daß die Fokussierungsoptik synchron mit der LCDS-Meßtiefe eingestellt wird. Bei der gewünschten schnellen Abtastung erfordert dies jedoch einen hohen technischen Aufwand oder ist sogar völlig unmöglich.

Außerdem stimmen die LCDS-Meßtiefe und die Fokustiefe während der Bewegung in Z-Richtung umso schlechter überein, je größer der Brechungsindex N ist. Dies ist darauf zurückzuführen, daß sich bei einer Verschiebung um Δz die Meßtiefe in dem Objekt um weniger als Δz, nämlich um Δzᵢ = Δz/N ändert, während die Fokustiefe wegen der Lichtbrechung an der Grenzfläche des Meßobjektes um mehr als Δz, näherungsweise um Δz_{f} = Δz * N verschoben wird. Demzufolge stimmen (für N ≠ 1) die Fokustiefe und die LCDS-Meßtiefe auch dann nicht über die gesamte Abtaststrecke überein, wenn zur Tiefenabtastung die Interferometereinheit insgesamt bewegt wird. Dieses Problem wird nachfolgend als "Brechungsindex-Problem" bezeichnet.

Soweit sich die Zitate 1) bis 5) mit diesen Problemen befassen, enthalten sie folgende Vorschläge zu dessen Lösung.

In Zitat 2) ist vorgesehen, zur Tiefenabtastung die gesamte aus Lichtquelle, Spiegel, Linsen und Strahlteiler bestehende Einheit in Abtastrichtung zu bewegen. Dadurch bewegt sich die Fokustiefe gleichgerichtet mit der LCDS-Meßtiefe. Es ist jedoch nur eine sehr geringe Abtastrate möglich, weil eine große und schwere Einheit insgesamt bewegt werden muß.

Auch das Zitat 4) beschreibt ein Gerät, bei dem die Tiefenabtastung durch Bewegung einer Einheit, die Lichtquelle, Strahlteiler und Detektor umfaßt, erreicht wird. In diesem Fall wird eine kompaktere Bauweise, ein geringeres Gewicht und damit eine höhere Abtastrate dadurch erreicht, daß die Interferometereinheit mittels eines optischen Chips und zusätzlicher besonderer Maßnahmen miniaturisiert ist. Zur Lösung des Brechungsindex-Problems werden dort Fokuskorrekturmittel vorgeschlagen, die zwischen der Interferometereinheit und dem Meßobjekt positioniert werden können. Damit läßt sich zwar eine sehr gute Übereinstimmung von Fokustiefe und LCDS-Meßtiefe erreichen, jedoch wäre es wünschenswert, den damit verbundenen konstruktiven Aufwand und die Baugröße zu vermindern.

Bei der in dem Zitat 3) beschriebenen Vorrichtung erfolgt die Einstellung der Fokustiefe und der LCDS-Meßtiefe mittels eines zusätzlichen in dem Meßarm angeordneten Reflektors, der zugleich fokussierende Eigenschaften hat. Dies erfordert eine zusätzliche Strahlaufteilung mittels eines zweiten Strahlteilers, der in dem Meßarm angeordnet ist, und von dem Meßlichtstrahl viermal passiert wird. Diese aufwendige Konstruktion führt zu einem großen Bauvolumen, außerdem wird das Meßlicht durch die mehrfache Strahlteilung stark geschwächt und dadurch das Signal/ Rauschverhältnis verschlechtert.

In dem Zitat 5) wird ein OCT-Gerät beschrieben, bei dem die Fokussierung ausschließlich mit elektronischen Mitteln erfolgen soll. Die elektronische Fokussierung ist jedoch prinzipbedingt einer optischen Fokussierung unterlegen. Dies gilt insbesondere bei Meßoptiken mit einer großen numerischen Apertur. Eine große numerische Apertur ist bei OCT-Geräten aus Gründen der Signalintensität und der Abbildungsschärfe jedoch notwendig. Außerdem wirkt die elektronische Fokussierung nur auf das aus der Probe remittierte Sekundärlicht, nicht auf das in die Probe eingestrahlte Primärlicht.

Auf dieser Basis befaßt sich die vorliegende Erfindung mit dem Problem, ein Niederkohärenz-interferometrisches Gerät zur Tiefenabtastung zur Verfügung zu stellen, das eine synchrone Verstellung der LCDS-Meßtiefe und der Fokustiefe bei einfachem Aufbau mit möglichst wenig beweglichen Teilen und kompakten Abmessungen ermöglicht.

Dieses Problem wird gelöst durch ein Niederkohärenz-interferometrisches Gerät mit den vorstehend erläuterten allgemeinen Merkmalen und wie im Anspruch 1 definiert, bei welchem das Interferometer ein Freistrahl-In-Line-Interferometer mit einer quer zu der Abtastrichtung verlaufenden Strahlteilerplatte ist, wobei der Lichtsender, der Detektor und der Referenzspiegel auf der von der Meßöffnung abgewandten Seite der Strahlteilerplatte angeordnet sind, der Lichtquellenarm und der Referenzarm zumindest in ihrem dem Strahlteiler benachbarten Abschnitt unter gleichem Winkel zu der ihnen zugewandten Oberfläche des Strahlteilers verlaufen, zwischen der Strahlteilerplatte und der Meßöffnung ein bewegliches Abtastobjektiv angeordnet ist und das bewegliche Abtastobjektiv und die Strahlteilerplatte zur Tiefenabtastung gleichgerichtet und synchron beweglich sind.

Durch die Erfindung werden unter anderem folgende Vorteile erzielt:
- Es ist ein sehr kompakter Aufbau möglich. Überraschenderweise ist die erfindungsgemäße Freistrahlkonstruktion insoweit vorbekannten Konstruktionen, die mit Lichtleitfasern oder optischen Chips arbeiten, überlegen.
- Die Fokus-Nachführung erfolgt durch gleichgerichtete Bewegung von nur zwei Bauteilen, die bevorzugt in Form eines gemeinsam beweglichen Abtastmoduls starr miteinander verbunden sind.
- Die Erfindung bietet die Möglichkeit, die numerische Apertur auf dem Lichtweg des in das Objekt eingestrahlten Lichtes (Primärlicht) verschieden von dem aus dem Meßobjekt reflektierten Licht (Sekundärlicht) einzustellen. Bevorzugt ist die numerische Apertur des Primärlichtweges kleiner als die numerische Apertur des Sekundärlichtweges.
- Die Erfindung ermöglicht mehrere zusätzliche Verbesserungen der Signalqualität, die nachfolgend noch näher erläutert werden.

Ein Beispiel für ein vorbekanntes Freistrahl-In-Line-Interferometer ist in dem Zitat 2) beschrieben. Eine andere Ausführungsform ist aus
6) DE 195 04 189 A1
bekannt. Diese Vorpublikationen enthalten jedoch keinen Hinweis darauf, daß mittels dieses Bauprinzips in Verbindung mit den weiteren Merkmalen der Erfindung das Problem der Fokus-Nachführung bei LCDS-Geräten in außerordentlich vorteilhafter Weise gelöst werden kann.

Die Erfindung wird nachfolgend anhand von in den Figuren dargestellten Ausführungsbeispielen näher erläutert. Die darin beschriebenen Besonderheiten können einzeln oder in Kombination miteinander eingesetzt werden, um bevorzugte Ausgestaltungen der Erfindung zu schaffen. Es zeigen:
- Fig. 1: ein erfindungsgemäßes Gerät, teilweise als schematische Schnittdarstellung und teilweise als Blockschaltbild;
- Fig. 2: eine Prinzipdarstellung des Strahlengangs in einem erfindungsgemäßen Gerät;
- Fig. 3: einen Teil des Strahlengangs in einer alterna- tiven Ausführungsform;
- Fig. 4: eine graphische Darstellung der Abweichung der Fokus-Nachführung bei einem idealen Brechungs- index der Probe;
- Fig. 5: eine graphische Darstellung der Abweichung der Fokus-Nachführung bei einem von dem Idealwert abweichenden Brechungsindex der Probe;
- Fig. 6: eine schematische Prinzipdarstellung eines Teils des Strahlengangs entsprechend Fig. 2 bei einer alternativen Ausführungsform, die eine Anpassung an unterschiedliche Brechungsindizes der Probe erlaubt;
- Fig. 7: ein graphische Darstellung der Abweichung der Fokus-Nachführung mittels der in Fig. 6 darge- stellten Ausführungsform bei guter Anpassung an den Brechungsindex der Probe;
- Fig. 8: ein graphische Darstellung der Abweichung der Fokus-Nachführung mittels der in Fig. 6 darge- stellten Ausführungsform bei weniger guter An- passung an den Brechungsindex der Probe;
- Fig. 9: schematische Seitenansichten von vier unter- schiedlichen Ausführungsformen eines für die Erfindung geeigneten Lichtsenders;
- Fig. 10: einen Teil des Strahlengangs einer weiteren al- ternativen Ausführungsform eines erfindungsge- mäßen Gerätes;
- Fig. 11: einen Teil des Strahlengangs einer weiteren al- ternativen Ausführungsform eines erfindungsge- mäßen Gerätes und
- Fig. 12: eine schematische Prinzipdarstellung einer Ein- richtung zur zusätzlichen elektronischen Fokus- korrektur.

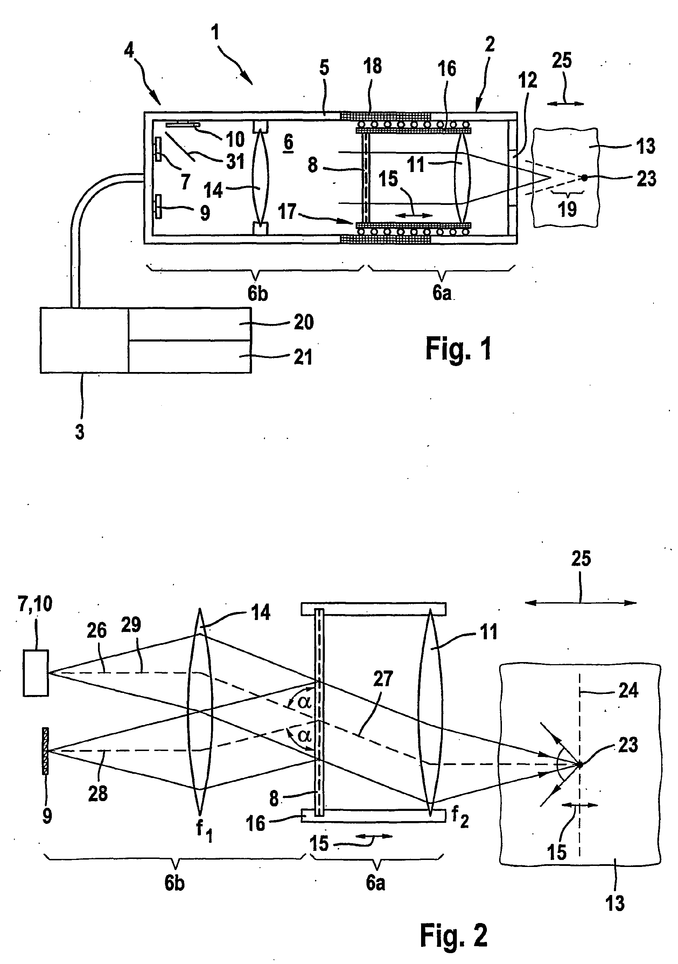

Das in Fig. 1 dargestellte LCDS-Gerät 1 besteht im wesentlichen aus einem Meßkopf 2 und einer mit dem Meßkopf 2 über ein Kabel verbundenen, lediglich schematisch als Block dargestellten Elektronikeinheit 3.

Das Gehäuse 5 des Meßkopfes 2 enthält die optischen Elemente eines Kurzkohärenz-Interferometers 6, nämlich eine kurzkohärente Lichtquelle 7, einen Strahlteiler 8, einen Referenzreflektor 9 und einen Detektor 10. Der Strahlteiler 8 teilt die In-Line-Anordnung des Interferometers 6 in einen dem Meßobjekt 13 zugewandten Abtastabschnitt 6a und in einen Detektionsabschnitt 6b. Er ist bevorzugt plattenförmig in dem Sinn ausgebildet, daß er eine im Vergleich zu seiner Dicke große Flächenausdehnung hat. Nachfolgend wird ohne Beschränkung der Allgemeinheit die Bezeichnung Strahlteilerplatte verwendet. Die Strahlteilerplatte kann im einfachsten Fall aus einem homogenen optischen Glas mit einer glatten, zur Einstellung des Teilerverhältnisses gegebenenfalls beschichteten Oberfläche bestehen. Sie kann aber, wie nachfolgend anhand eines anderen Ausführungsbeispiels noch gezeigt wird, auch eine kompliziertere Struktur mit in unterschiedlichen Flächenabschnitten unterschiedlichen Transmissionseigenschaften und/oder eine profilierten Oberflächenstruktur haben.

In dem Gehäuse 5 sind zwei Objektive vorgesehen, wobei ein erstes, nachfolgend als Abtastobjektiv (scanning lens) 11 bezeichnetes Objektiv in dem Abtastabschnitt 6a zwischen der Strahlteilerplatte 8 und einer Meßöffnung 12 positioniert ist, durch die das Meßlicht in ein vor der Meßöffnung plaziertes Untersuchungsobjekt 13 eingestrahlt wird. Ein zweites Objektiv, das nachfolgend als Detektionsobjektiv (detecting lens) 14 bezeichnet wird, ist in dem Detektionsabschnitt 6b zwischen der Strahlteilerplatte 8 und der von dem Lichtsender 7, dem Detektor 10 und dem Referenzreflektor 9 gebildeten Lichtsender/Empfangseinrichtung 4 positioniert. Die Objektive 11 und 14 sind jeweils als einfache Linsen dargestellt, können in der Praxis aber auch mehrlinsig sein.

Die Strahlteilerplatte 8 und das Abtastobjektiv 11 sind zur Tiefenabtastung gleichgerichtet und synchron beweglich. Bei der dargestellten bevorzugten Ausführungsform sind sie - als Bestandteile eines Abtastmoduls 16 -starr miteinander verbunden. Zur Bewegung des Abtastmoduls 16 (somit zur gemeinsamen Bewegung der Strahlteilerplatte 8 und des Abtastobjektivs 11) in der durch den Pfeil 15 symbolisierten, quer zu der Ebene der Strahlteilerplatte verlaufenden Abtastrichtung ist ein mit 17 bezeichneter Linearantrieb vorgesehen, der beispielsweise - wie dargestellt - elektromagnetisch mittels einer das Abtastmodul 16 umgebenden Spule 18 realisiert sein kann. Die Bewegung des Abtastmoduls 16 führt zu einer Verschiebung der mit dem LCDS-Gerät beobachteten Reflexionsstelle 23 längs einer Abtaststrecke 19.

Die Elektronikeinheit 3 enthält die für den Betrieb des Meßkopfes 2 und für die Auswertung der gewonnenen Signale erforderlichen elektronischen Elemente. Hierzu gehört eine Steuereinheit 20 zur Steuerung der Abtastbewegung und eine Auswerteelektronik 21 zur Auswertung der Interferenzsignale. Die Auswerteeinheit 21 und das zur Auswertung des Interferenzsignals verwendete Verfahren weisen keine Besonderheiten auf. Diesbezüglich kann auf die einschlägige Literatur verwiesen werden.

In Fig. 2 ist ein kombiniertes Lichtsender-Detektorelement 7,10 dargestellt, bei dem sich Lichtsender und Detektor in enger räumlicher Nachbarschaft befinden, wie weiter unten noch näher erläutert wird. Das von dem Lichtsender 7 ausgehende Primärlicht wird von dem Detektionsobjektiv 14 kollimiert und fällt als Parallelstrahl auf die Strahlteilerplatte 8. Die Strahlteilerplatte 8 trennt das Licht in einen durchtretenden Anteil und in einen reflektierten Anteil auf. Das reflektierte Licht wird als Referenzlicht durch das Detektionsobjektiv auf den Referenzspiegel 9 fokussiert, dort reflektiert und fällt nach erneuter Reflexion an der Strahlteilerplatte zurück zu dem Detektor 10.

Das durch die Strahlteilerplatte 8 durchtretende Licht wird von dem Abtastobjektiv 11 in eine Fokusebene 24 in dem Untersuchungsobjekt 13 fokussiert. Wenn es an einer Reflexionsstelle 23 von einem in dem Untersuchungsobjekt 13 vorhandenen reflektierenden Strukturelement reflektiert wird, fällt es durch das Abtastobjektiv 11 und die Strahlteilerplatte 8 sowie das Detektionsobjektiv 14 zurück auf den Detektor 10.

Die Lichtwege zwischen den Elementen 7, 8, 9 und 10 bilden Interferometerarme eines Freistrahl-In-Line-Interferometers, nämlich einen Lichtquellenarm 26 zwischen der Lichtquelle 7 und dem Strahlteiler 8, einen Objektarm 27 zwischen den Strahlteiler 8 und der Reflexionsstelle 23 in dem Objekt 13, einen Referenzarm 28 zwischen dem Strahlteiler 8 und dem Referenzreflektor 9 und einen Detektorarm 29 zwischen dem Strahlteiler 8 und dem Detektor 10.

Die Strahlteilerplatte 8 verläuft quer zu der durch die Pfeile 15 symbolisierten Abtastrichtung, die mit der optischen Achse der Objektive 11 und 14 übereinstimmt. Das im wesentlichen aus der Strahlteilerplatte 8 und dem Abtastobjektiv 11 gebildete Abtastmodul ist zur Tiefenabtastung in der Abtastrichtung 15 beweglich. Die spiegelnde Reflexion an der Abtastplatte 8 führt dazu, daß der Referenzarm zumindest in seinem der Strahlteilerplatte 8 benachbarten Abschnitt unter dem gleichen Winkel α wie der Lichtquellenarm 26 zu der Strahlteilerplatte 8 verläuft. Der Lichtquellenarm 26 und der Detektionsarm 29 verlaufen zumindest in ihrem der Strahlteilerplatte 8 benachbarten Abschnitt koaxial.

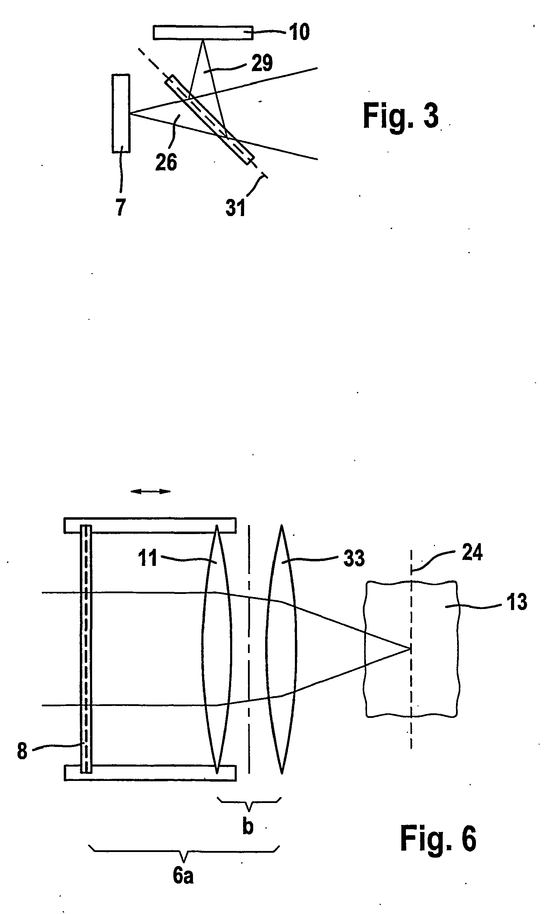

Bei der in Fig. 3 dargestellten Anordnung ist in dem Lichtweg des Lichtquellenarms 26 und des hierzu koaxialen Detektorarms 29 ein halbdurchlässiger Spiegel 31 vorgesehen, durch den einerseits von der Lichtquelle 7 kommende Primärlicht durchtritt und an dessen der Strahlteilerplatte 8 zugewandten Oberfläche eine Reflexion des Detektionslichts in Richtung auf den Detektor 10 stattfindet. Dadurch werden der Lichtsender 7 und der Detektor 10 räumlich getrennt. Der Lichtquellenarm 26 verläuft in dem an den Lichtsender 7 angrenzenden Abschnitt getrennt von dem an den Detektor 10 angrenzenden Abschnitt des Detektorarms 29.

Durch die dargestellte Anordnung wird - wie auch bei anderen Interferometeranordnungen - erreicht, daß das einerseits an dem Referenzspiegel 9 und andererseits an der Reflexionsstelle 23 in dem Objekt 13 reflektierte Licht auf der gleichen lichtempfänglichen Fläche des Detektors 10 auftritt. Dies führt zu Interferenz, wenn der optische Weg des Meßlichts (bestehend aus Lichtquellenarm 26, Objektarm 27 und Detektionsarm 29) sich von dem optischen Lichtweg des Referenzlichts (bestehend aus Lichtquellenarm 26, Referenzarm 28 und Detektionsarm 29) um nicht mehr als die Kohärenzlänge des Lichts unterscheidet. Da diese bei geeigneter Wahl der Lichtquelle größenordnungsmäßig 10 µm beträgt, erlaubt die Tiefenabtastung eine Auflösung in dieser Größenordnung.

Die Bewegung des Abtastmoduls 16 in Richtung 15 um einen Betrag Δz in Richtung auf das Untersuchungsobjekt 13 (in Fig. 2 von links nach rechts) führt zu einer Verlängerung des optischen Wegs des Referenzlichts von näherungsweise 2Δz. Entsprechend verschiebt sich die LCDS-Meßtiefe in dem Untersuchungsobjekt um 2Δz/N in das Untersuchungsobjekt hinein, wobei N der Brechungsindex des Untersuchungsobjekts ist. Die gleiche Bewegung des Abtastmoduls 16 um Δz führt zu einer Verschiebung der Fokusebene 24 durch die an den Strahlteiler gekoppelte Bewegung des Abtastobjektivs 11 um Δz*N. Durch Gleichsetzen der genannten Bedingungen ergibt sich, daß beide Verschiebungen gleich groß sind für einen Brechungsindex von N = √2 = 1,414.

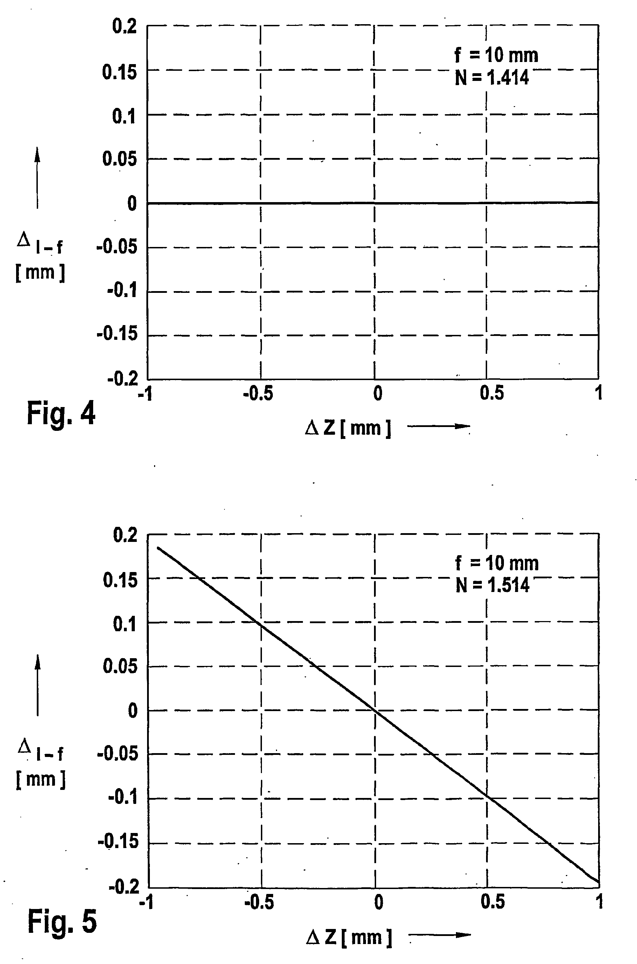

In Fig. 4 ist dieser Zusammenhang für ein Abtastobjektiv mit einer Brennweite f₂ = 10 mm graphisch verdeutlicht. Darin ist die als Δ_{l-f} bezeichnete (Differenz zwischen der LCDS-Meßtiefe und der Fokustiefe in mm) in Abhängigkeit von der Verschiebung Δz des Abtastmoduls 16 (ebenfalls in mm) aufgetragen. Man erkennt, daß die Fokusabweichung für einen Brechungsindex N = 1,414 Null ist. Hingegen zeigt Fig. 5 eine gleichartige Darstellung für einen Brechungsindex von N = 1,514 mit einer erheblichen Abweichung der Fokus-Nachführung.

Da der mittlere Brechungsindex in menschlicher Haut relativ nah bei dem Wert von 1,414 liegt, kann die in den Figuren 1 und 2 dargestellte besonders einfache Ausführungsform der Erfindung mit gutem Erfolg für medizinische Untersuchungen an biologischem Gewebe, insbesondere Hautgewebe verwendet werden. Wenn hingegen (medizinische oder nichtmedizinische) Untersuchungsobjekte, deren Brechungsindex deutlich von dem genannten Wert abweicht, mit geringer Fokusabweichung über einen größeren Δz-Bereich untersucht werden sollen, sind zusätzliche Maßnahmen gemäß bevorzugter Ausführungsformen der Erfindung zu empfehlen.

Insbesondere kann es zweckmäßig sein, den Linearantrieb 17, der zur Bewegung der Strahlteilerplatte 8 und des Abtastobjektivs 11 verwendet wird, so auszubilden, daß die Strahlteilerplatte 8 und das Abtastobjektiv 11 zwar gleichgerichtet und synchron, jedoch nicht mit gleicher Geschwindigkeit in der Abtastrichtung 15 bewegt werden. Bevorzugt stehen beide Geschwindigkeiten in einem festen Verhältnis zueinander, die Bewegungsgeschwindigkeit des Abtastobjektivs 11 kann also beispielsweise in jeder Bewegungsphase 90% oder 110% der Bewegungsgeschwindigkeit der Strahlteilerplatte 8 betragen. Demzufolge ist die Verschiebung der Fokustiefe bei einer gegebenen Verschiebung der Strahlteilerplatte 8 entsprechend größer oder kleiner, so daß die exakte Fokusnachführung (Fokusabweichung 0) bei einem anderen Brechungsindex erreicht wird. Das im Einzelfall erforderliche Geschwindigkeitsverhältnis der Bewegungen der Strahlteilerplatte 8 und des Abtastobjektivs 11 läßt sich empirisch oder - auf Basis der weiter oben erläuterten Überlegungen - rechnerisch ohne weiteres ermitteln. Auch die zur Realisierung einer solchen Verschiebung in einem definierten Geschwindigkeitsverhältnis erforderlichen Mittel sind dem Fachmann geläufig. Beispielsweise können entsprechende elektronisch gesteuerte Stellantriebe verwendet werden. Auch eine mechanische Kopplung, beispielsweise über Antriebshebel, kann zur Realisierung des gewünschten Verhältnisses der Antriebsgeschwindigkeit verwendet werden.

Fig. 4 zeigt eine Ausführungsform der Erfindung, gemäß der eine nahezu perfekte Fokusnachführung für beliebige Brechungsindizes mit einem Minimum an konstruktivem Aufwand erreicht werden kann. Dabei ist in dem Abtastabschnitt 6a zwischen dem beweglichen Abtastobjektiv 11 und dem Untersuchungsobjekt 13, möglichst dicht bei dem Abtastobjektiv 11, ein zusätzliches stationäres Objektiv 33 angeordnet, wobei die Fokussierung des Meßlichts in der Fokusebene 24 durch die gemeinsame Wirkung beider Objektive 11, 33 erreicht wird. Aufgrund geometrisch-optischer Gesetzmäßigkeiten läßt sich zeigen, daß bei einer solchen Anordnung die Verschiebung des beweglichen Abtastobjektivs 11 um den Betrag ΔZ zu einer Verschiebung der Fokusebene um AZ*N*a² führt. Darin ist a ein Teilerfaktor, der das Verhältnis der beiden Einzelbrennweiten f₁ und f₂ als Beiträge zu der Gesamtbrennweite f der aus den Objektiven 11 und 33 bestehenden Kombination beschreibt (f₁ = f/a; f₂ = f/(1-a)).

Setzt man dieses Ergebnis wiederum mit der Verschiebung der LCDS-Meßtiefe gleich, so ergibt sich eine perfekte Fokusnachführung für N = √2/a. Der Teilerfaktor a der Objektivkombination 11,33 muß so gewählt werden, daß der Brechungsindex des jeweiligen Untersuchungsobjekts resultiert. Mit Werten von a < 1 lassen sich Brechungsindizes größer als 1,414 realisieren. Falls der Brechungsindex des Untersuchungsobjekts kleiner als 1,414 ist, muß a größer als 1 sein. Dies entspricht einem Fall, bei dem das stationäre Objektiv 33 eine negative Brennweite hat, also Zerstreuungseigenschaften besitzt.

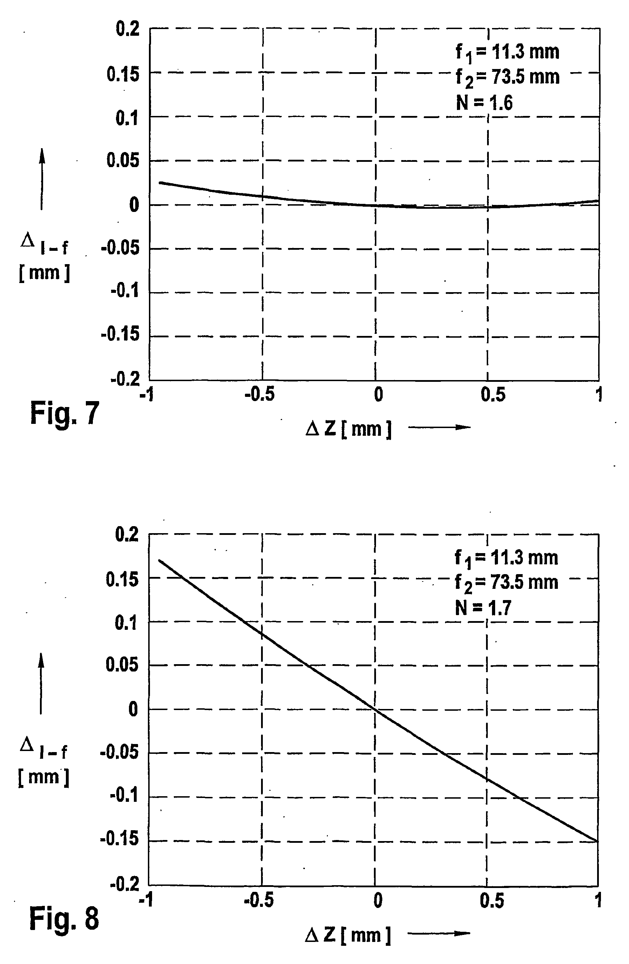

Fig. 7 zeigt eine Darstellung entsprechend Fig. 4 für einen Fall, der optimal auf einen Brechungsindex des Untersuchungsobjekts von n = 1,6 abgestimmt ist, wobei die Objektivbrennweiten f₁ = 11,3 mm und f₂ = 73,5 mm betragen. Man erkennt eine geringfügige Abweichung von der perfekten Fokusnachführung, die damit zusammenhängt, daß die vorstehend erläuterten Überlegungen darauf basieren, daß der Abstand b der Objektive 11,13 sehr viel kleiner als die Summe ihrer Brennweiten ist. Um dieser Bedingung möglich nahezukommen, ist es vorteilhaft, wenn das stationäre Objektiv 33 so nahe wie möglich bei dem beweglichen Abtastobjektiv 11 angeordnet ist und beide Objektive eine geringe Dicke aufweisen. Sie sind deshalb bevorzugt jeweils einlinsig gestaltet.

Fig. 8 zeigt auch für diesen Fall, daß die Abweichung von dem Brechungsindex-Sollwert zu starken Fehlern bei der Fokusnachführung führt.

Wie erwähnt, ist die Erfindung insbesondere für OCT-Verfahren geeignet. Die zu diesem Zweck erforderliche zwei- oder dreidimensionale Abtastung wird bevorzugt dadurch erreicht, daß der Lichtsender 7 sich eindimensional längs einer Linie oder zweidimensional über eine Fläche erstreckt und der Detektor von einem entsprechenden linearen oder zweidimensionalen Array diskreter lichtempfindlicher Flächen gebildet wird. Dadurch wird eine OCT-Darstellung mit ausgezeichneter lateraler Auflösung in einem Bildfeld, dessen Abmessungen den Abmessungen des Lichtsenders bzw. des Detektor-Arrays entspricht, erreicht, ohne daß zusätzliche Aktoren für eine laterale Verschiebung des Detektionsorts erforderlich sind.

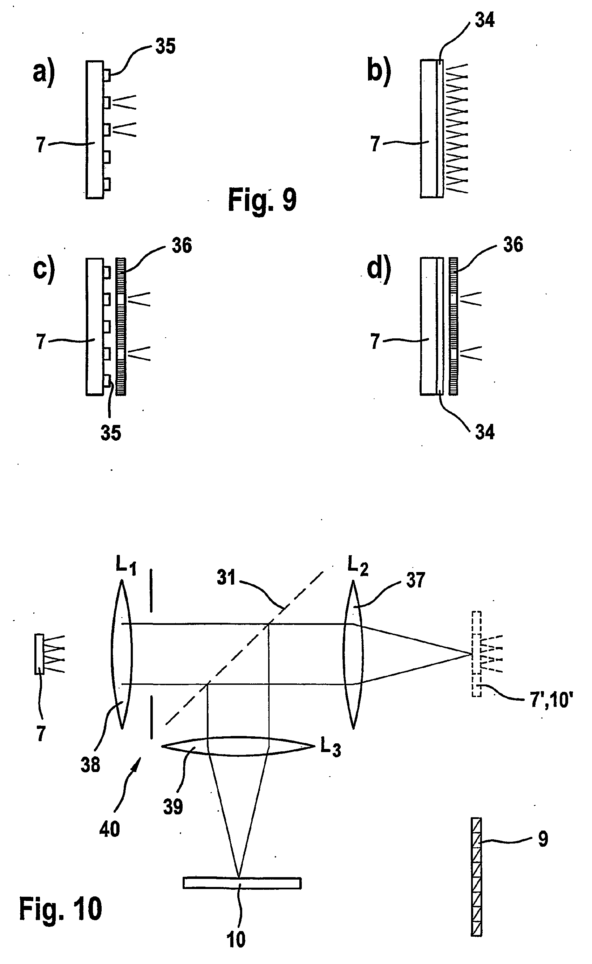

Fig. 9 zeigt schematisch vier verschiedene Konstruktionen einer geeigneten Lichtsendereinheit 7. Gemäß Fig. 9a kann ein Lichtquellen-Array mit diskreten Emittern 35 verwendet werden, wobei die Emitter eindimensional längs einer Linie oder zweidimensional (zum Beispiel schachbrettartig) auf einer Fläche angeordnet sein können. Die einzelnen Emitter können durch diskrete lichtemittierende Halbleiterelemente (Kanten- oder Oberflächenemitter einer LED) oder ein Array von Lichtleitfasern gebildet werden. Fig. 9b zeigt, daß alternativ auch ein Flächenstrahler zum Einsatz kommen kann.

Um ein Übersprechen zwischen benachbarten lichtemittierenden Punkten zu reduzieren, kann es sinnvoll sein, vor der Lichtsendereinheit 7 ein elektronisches lichtsteuerndes Element, insbesondere ein SLM ("Spatial Light Modulator") anzuordnen. Fig. 9c zeigt ein SLM 36, das so betrieben wird, daß zu einem bestimmten Zeitpunkt jeweils nur das Licht von jedem zweiten Emitter 35 durchgelassen wird. Damit erhöht sich der Abstand zwischen den jeweils aktiven Emittern und das Übersprechen wird reduziert.

Ähnliches gilt für die in Fig. 9d gezeigte Anordnung, bei der ein SLM 36 vor einem Flächenstrahler 34 positioniert ist.

Wie bereits anhand von Fig. 3 erläutert wurde, kann es zweckmäßig sein, die Lichtquelle 7 und den Detektor 10 mittels eines halbdurchlässigen Spiegels 31 räumlich zu trennen (und zugleich die im Rahmen der Erfindung erforderliche koaxiale optische Anordnung aufrechtzuerhalten). Diesbezüglich zeigt Fig. 10 eine bevorzugte Ausführungsform, bei der mittels eines aus drei Linsen 37, 38 und 39 und einem halbdurchlässigen Spiegel 31 bestehenden optischen Systems 40 an der Stelle, an der sich in Fig. 2 die Lichtsender-Detektoreinheit 7,10 befindet, ein gestrichelt dargestelltes reelles Bild 10 der separat positionieren Komponenten Lichtsender 7 und Detektor-Array 10 erzeugt wird. Im Verhältnis zu Fig. 3 besteht der Vorteil dieser Anordnung darin, daß das Licht den halbdurchlässigen Spiegel 31 als weitgehend paralleler Lichtstrahl passiert und dadurch Fehler durch winkelabhängige Strahlteilerverhältnisse des halbdurchlässigen Spiegels 31 vermieden werden. Außerdem erlaubt eine derartige Anordnung die individuelle Adaptierung der Optik an die Erfordernisse des Lichtsenders 7 einerseits und des Detektors 10 andererseits. Insbesondere ist vorzugsweise das reelle Bild 10' des Detektors kleiner als das physische Detektor-Array 10. Mit anderen Worten hat das optische System 40 hinsichtlich des Detektors 10 vergrößernde Eigenschaften. Dadurch kann mit kommerziell erhältlichen lichtempfindlichen Elementen (deren Durchmesser in der Regel größer als 10 µm ist) eine sehr hohe Auflösung (besser als 10 µm) erreicht werden. Auch im Hinblick auf das Signal/Rauschverhältnis ist eine solche Anordnung vorteilhaft.

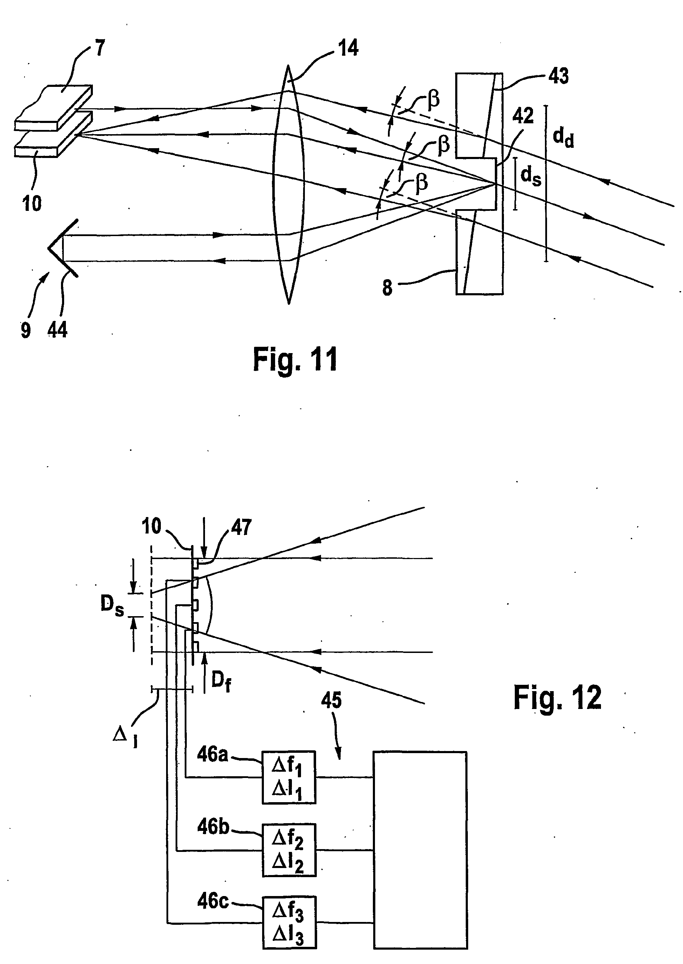

Fig. 11 zeigt eine Anordnung, durch die ein halbdurchlässiger Spiegel 31, der den Lichtweg zu dem Detektor 10 von dem Lichtweg, über den das Primärlicht von dem Lichtsender 7 abgestrahlt wird, trennt, vermieden wird. Dabei wird davon ausgegangen, daß das Primärlicht von dem Lichtsender 7 unter einem deutlich kleineren Winkel (d.h. mit einer kleiner numerischen Apertur) abgestrahlt wird, als der Detektor 10 das Licht (mit einer hohen numerischen Apertur) empfängt. Dies kann bei der erfindungsgemäßen Freistrahlanordnung leicht realisiert werden und ist auch in anderer Hinsicht vorteilhaft.

Bei der in Fig. 11 dargestellten Anordnung sind eine Lichtquelle 7 und ein Detektor 10 in enger räumlicher Nachbarschaft lokalisiert. Es können auch kombinierte Lichtsender-Detektor-Module verwendet werden, bei denen eindimensionale Lichtquellenarrays neben eindimensionalen Detektorarrays oder zweidimensionale Lichtquellenarrays neben zweidimensionalen Detektorarrays angeordnet sind.

Das Licht der Lichtquelle 7 wird durch das Detektionsobjektiv 14 kollimiert und passiert, wegen der kleineren numerischen Apertur, einen Fensterbereich 42 mit einem relativ kleinen Durchmesser mit einem relativ kleinen Durchmesser dₛ in einer Strahlteilerplatte 8. Die Strahlteilerplatte 8 hat in unterschiedlichen Flächenbereichen unterschiedliche Transmissionseigenschaften. In den Fensterbereichen 42 läßt sie das Primärlicht ohne Strahlablenkung passieren und reflektiert einen vorbestimmten Anteil, beispielsweise 50%, in Richtung auf den Referenzreflektor 9. In ihrem übrigen Flächenbereich 43 (außerhalb des Fensterbereiches 42) hat sie die Eigenschaft, ein leichtes Kippen eines sie durchsetzenden Parallelstrahls um einen Winkel β zu bewirken. Nach Reflexion aus dem Untersuchungsobjekt 13 trifft das Licht auf die Strahlteilerplatte 8 mit einer größeren numerischen Apertur innerhalb eines größeren Durchmessers d_{d} auf. Dadurch wird der weitere Strahlverlauf in Richtung auf den Detektor 10 gekippt. Selbstverständlich muß auch hinsichtlich des Referenzlichts eine entsprechende geringe Änderung der Strahlrichtung um den Winkel β stattfinden. Dies kann leicht, wie in Fig. 11 dargestellt, dadurch bewirkt werden, daß als Referenzspiegel 9 ein verspiegeltes Prisma 44 eingesetzt wird.

Das Kippen der Strahlrichtung um den Winkel β läßt sich in dem Fachmann geläufiger Weise durch eine entsprechende Struktur der Strahlteilerplatte 8 erreichen. Beispielsweise kann die Platte - wie dargestellt - aus keilförmig verlaufenden Abschnitten von optischem Glas mit einem unterschiedlichen Brechungsindex zusammengesetzt sein. Dabei unterscheidet sich die Strahlteilerplatte 8 in den Teilbereichen 42 und 43 möglicherweise nicht nur hinsichtlich ihrer richtungsmäßigen Transmissionseigenschaften (Kippen der Strahlrichtung), sondern auch hinsichtlich ihrer intensitätsmäßigen Transmissionseigenschaften. Im dargestellten Fall ist sie in den Teilbereichen 43 auf der dem Meßobjekt zugewandten Seite mit einem Coating versehen, das die Reflexion möglichst vollständig verhindert, so daß das von dem Meßobjekt reflektierte auf die Strahlteilerplatte 8 auftreffende Sekundärlicht nur zu einem möglichst geringen Anteil an der Oberfläche reflektiert wird und somit möglichst vollständig zu dem Detektor 10 gelangt.

Abgesehen von einer geringen Verkippung um einen Winkel β von höchstens 20 Grad, bevorzugt höchstens 15 Grad sollten die optischen Achsen des von der Strahlteilerplatte auf den Detektor 10 einfallende Sekundärlicht und des von dem Lichtsender 7 in Richtung auf die Strahlteilerplatte 8 abgestrahlten Primärlichts im wesentlichen übereinstimmen, d.h. der Lichtquellenarm 26 und der Detektionsarm 28 sollten näherungsweise koaxial verlaufen.

Die beispielhaft anhand von Fig. 11 dargestellte Trennung des Detektionsarms des Interferometers von dem Lichtquellenarm ohne Verwendung eines halbdurchlässigen Spiegels hat den Vorteil, daß die mit einem solchen Spiegel verbundene Schwächung der Lichtintensität vermieden wird.

Fig. 12 zeigt eine weitere bevorzugte Ausführungsform, bei der ergänzend eine elektronische Fokuskorrektur verwendet wird. Dabei ist (als Bestandteil der Elektronikeinheit 3) eine Fokuskorrekturschaltung 45 vorgesehen, die Verzögerungsglieder 46a bis 46c einschließt, durch die die Signale, die von unterschiedlichen diskreten lichtempfindlichen Elementen 47 eines Detektor-Arrays erzeugt werden, selektiv relativ zueinander verzögert werden können.

Eine solche Fokuskorrektur kann im Rahmen der Erfindung in mehrerlei Hinsicht vorteilhaft eingesetzt werden. Zum einen kann sie dazu dienen, vorbekannte statische Fokussierungsfehler wie beispielsweise durch Aberrationen der Objektive 11 und 14 (oder anderer optischer Abbildungselemente des Systems) erzeugt werden, zu kompensieren. Dadurch ist es möglich, mit kleinen einfachen und kostengünstigen Linsen zu arbeiten.

Außerdem können auch Fokussierungsfehler korrigiert werden, die durch statistische, nicht vorbekannte Brechungsindexfluktuationen verursacht sind. Sie können beispielsweise daraus resultieren, daß die Oberfläche des Untersuchungsobjekts nicht exakt eben ist. Im Rahmen der LCDS-Messung wird die Oberfläche des Objekts 13 als starkes Reflexionssignal detektiert. Diese Information kann in der Elektronikeinheit 3 zu einem dynamischen Bild der Oberflächenstruktur verarbeitet und verwendet werden, um die unterschiedlichen optischen Weglängen und daraus resultierenden Lichtlaufzeiten in dem Untersuchungsobjekt 13 auszugleichen.

Die Erfindung erlaubt insgesamt eine außerordentliche raumsparende Konstruktion, insbesondere hinsichtlich des Durchmessers der in Fig. 1 nur in stark schematisierter Form dargestellten Anordnung. Damit sind insbesondere auch endoskopische Untersuchungen möglich. Bei Verwendung eines ein- oder zweidimensional ausgedehnten Lichtsender- und Detektor-Arrays läßt sich eine sehr gute hochauflösende Darstellung sowohl in lateraler als auch in longitudinaler Richtung erreichen, wobei nur ein Bewegungsantrieb in Längsrichtung erforderlich ist. Durch entsprechende Wahl das Teilerverhältnis der Strahlteilerplatte 8 kann das Intensitätsverhältnis des detektierten Lichts in Relation zu dem eingestrahlten Primärlicht im Sinne eines optimalen Signal-/Rauschverhältnisses eingestellt werden. Vorzugsweise wird ein auch in z-Richtung ein zumindest hinsichtlich der Dispersion symmetrischer Aufbau gewählt, d.h. die Objektive 11 und 14 (bzw. bei der Ausführungsform nach Fig. 6 die Objektivkombination 11/33 und das Objektiv 14) haben näherungsweise gleiche Dispersionseigenschaften. Dadurch werden insbesondere Probleme mit unterschiedlicher Dispersion in den Interferometerarmen vermieden.

## Patentansprüche

1. Niederkohärenz-interferometrisches Gerät zur lichtoptischen Tiefenabtastung eines vor einer Meßöffnung (12) des Gerätes positionierten Objektes (13) durch Detektion der Position von lichtremittierenden Stellen, die in unterschiedlichen Meßtiefen innerhalb des Objektes (13) längs einer in das Objekt hinein in einer Abtastrichtung (25) verlaufenden Abtaststrecke (19) lokalisiert sind
mit einem Kurzkohärenz-Interferometer, welches eine kurzkohärente Lichtquelle (7), einen Strahlteiler (8), einen Referenzreflektor (9) und einen Detektor (10) umfaßt, wobei
- die Lichtwege zwischen den Elementen des Interferometers (6) Interferometerarme bilden, nämlich einen Lichtquellenarm (26) zwischen der Lichtquelle (7) und dem Strahlteiler (8), einen Objektarm (27) zwischen dem Strahlteiler (8) und der lichtremittierenden Stelle (23) in dem Objekt (13), einen Referenzarm (28) zwischen dem Strahlteiler (8) und dem Referenzreflektor (9) und einen Detektorarm (29) zwischen dem Strahlteiler (8) und dem Detektor (10),
- Meßlicht über den Lichtquellenarm (26) und den Objektarm (27) in Abtastrichtung als Primärlicht in das Objekt (13) eingestrahlt und in dem Objekt (13) an der lichtremittierenden Stelle (23) reflektiertes Licht über den Objektarm (27) und den Detektorarm (29) als Sekundärlicht zu dem Detektor (10) geleitet wird,
- Referenzlicht von dem Strahlteiler (8) zu dem Referenzreflektor (9) und von dort über den Referenzarm (28) und den Detektorarm (29) zu dem Detektor (10) geleitet wird, und
- das Meßlicht und das Referenzlicht so zusammengeführt werden, daß sie beim Auftreffen auf den Detektor ein Interferenzsignal erzeugen, wenn die optische Weglänge des aus dem Lichtquellenarm (26), dem Objektarm (27) und dem Detektorarm (29) bestehenden Meßlichtweges und des aus dem Lichtquellenarm (26), dem Referenzarm (28) und dem Detektorarm (29) bestehenden Referenzlichtweges übereinstimmen,
bei welchem
das Interferometer ein Freistrahl-In-Line-Interferometer (6) mit einem quer zu der Abtastrichtung (25) verlaufenden Strahlteiler (8) ist, wobei der Lichtsender (7), der Detektor (10) und der Referenzspiegel (9) auf der von der Meßöffnung abgewandten Seite des Strahlteilers angeordnet sind,
der Lichtquellenarm (26) und der Referenzarm (28) zumindest in ihrem dem Strahlteiler benachbarten Abschnitt unter gleichem Winkel (α) zu der ihnen zugewandten Oberfläche des Strahlteilers (8) verlaufen,
zwischen dem Strahlteiler (8) und der Meßöffnung (12) ein bewegliches Abtastobjektiv (11) angeordnet ist und
das bewegliche Abtastobjektiv (11) und der Strahlteiler (8) zur Tiefenabtastung gleichgerichtet und synchron relativ zu dem Lichtsender (7), dem Detektor (10) und dem Referenzspiegel (9) beweglich sind.

2. Gerät nach Anspruch 1, bei welchem das bewegliche Abtastobjektiv (11) und der Strahlteiler (8) miteinander fest verbunden und gemeinsam beweglich sind.

3. Gerät nach einem der vorhergehenden Ansprüche, bei welchem auf der von der Meßöffnung (12) abgewandten Seite des Strahlteilers (8) ein Detektionsobjektiv (4) angeordnet ist.

4. Gerät nach einem der vorhergehenden Ansprüche, welches in einer dem Abtastobjektiv (11) benachbarten Position ein stationäres Objektiv (33) aufweist.

5. Gerät nach einem der vorhergehenden Ansprüche, bei welchem der Lichtsender (7) so ausgebildet ist, daß er Licht längs einer senkrecht zu der Strahlrichtung verlaufenden Linie abstrahlt.

6. Gerät nach Anspruch 5, bei welchem der Lichtsender (7) so ausgebildet ist, daß er Licht über eine sich senkrecht zur Strahlrichtung erstreckende Fläche abstrahlt.

7. Gerät nach einem der vorhergehenden Ansprüche, bei welchem der Detektor (10) eine Mehrzahl von längs einer Linie angeordneten lichtempfindlichen Elementen (35) aufweist.

8. Gerät nach Anspruch 7, bei welchem der Detektor (19) eine Mehrzahl von zweidimensional auf einer Fläche verteilten lichtempfindlichen Elementen (35) aufweist.

9. Gerät nach einem der Ansprüche 7 oder 8, bei welchem die lichtempfindlichen Elemente (35) gemeinsam mit Lichtsenderelementen in einem kombinierten Lichtsender-Detektor-Modul angeordnet sind.

10. Gerät nach einem der Ansprüche 7 bis 9, bei welchem eine elektronische Fokuskorrekturschaltung (44) vorgesehen ist, durch die die Signale der lichtempfindlichen Elemente (35) des Detektors (19) relativ zueinander selektiv verzögert werden.

11. Gerät nach einem der vorhergehenden Ansprüche, bei welchem die numerische Apertur des Lichtweges, auf dem das Primärlicht in das Objekt (13) eingestrahlt wird, kleiner ist als die numerische Apertur des Lichtweges, über den das Sekundärlicht detektiert wird.

## Claims

1. Low-coherence interferometric device for light optical depth scanning of an object positioned in front of a measurement aperture (12) of the device by detecting the position of light reflecting sites which are located at different measurement depths within the object (13) along a scanning path (19) running into the object in a scanning direction (25) having a low-coherence interferometer which comprises a low-coherence light source (7), a beam splitter (8), a reference reflector (9) and a detector (10), wherein
- the light paths between the elements of the interferometer (6) form interferometer arms, namely a light source arm (26) between the light source (7) and the beam splitter (8), an object arm (27) between the beam splitter (8) and the light-reflecting site (23) in the object (13), a reference arm (28) between the beam splitter (8) and the reference reflector (9) and a detector arm (29) between the beam splitter (8) and the detector (10),
- measurement light is irradiated into the object via the light source arm (26) and the object arm (27) in the scanning direction as primary light, and light reflected at the light-reflecting site (23) in the object (13) is directed as secondary light via the object arm (27) and the detector arm (29) to the detector (10),
- reference light is directed from the beam splitter (8) to the reference reflector (9) and from there via the reference arm (28) and the detector arm (29) to the detector (10), and
- the measurement light and the reference light are combined in such a manner that an interference signal is generated by the detector when the optical path length of the measurement light path consisting of the light source arm (26), the object arm (27) and the detector arm (29) corresponds to the optical length of the reference light path consisting of the light source arm (26), the reference arm (28) and the detector arm (29),
wherein
the interferometer is a free-space in-line interferometer (6) having a beam splitter (8) oriented transverse to the scanning direction (25), the light transmitter (7), the detector (10) and the reference mirror (9) being arranged on the side of the beam splitter facing away from the measurement aperture,
the light source arm (26) and the reference arm (28) run at least in their sections adjacent to the beam splitter at the same angle (α) to the surface of the beam splitter (8) facing them,
a movable scanning lens (11) is arranged between the beam splitter (8) and the measurement aperture (12), and
the movable scanning lens (11) and the beam splitter (8) are movable for depth scanning in the same direction and in synchronization relative to the light transmitter (7), the detector (10) and the reference mirror (9).

2. Device according to claim 1, wherein the movable scanning lens (11) and the beam splitter (8) are fixed to each other and jointly movable.

3. Device according to any one of the preceding claims, wherein a detection lens (4) is arranged on the side of the beam splitter (8) facing away from the measurement aperture (12).

4. Device according to any one of the preceding claims comprising a stationary lens (33) in a position adjacent to the scanning lens (11).

5. Device according to any one of the preceding claims wherein the light transmitter (7) is adapted to emit light along a line running perpendicular to the direction of the beam.

6. Device according to claim 5, wherein the light transmitter (7) is adapted to emit light in a plane extending perpendicular to the direction of the beam.

7. Device according to any one of the preceding claims wherein the detector (10) has a plurality of light-sensitive elements (35) arranged along a line.

8. Device according to claim 7 wherein the detector (19) has a plurality of light-sensitive elements (35) distributed as a two-dimensional array in a plane.

9. Device according to any one of claims 7 or 8 wherein the light-sensitive elements (35) are arranged jointly together with light transmitter elements in a combined light transmitter-detector module.

10. Device according to any one of claims 7 to 9 wherein an electronic focus-correcting circuit (44) is provided by means of which the signals of the light-sensitive elements (35) of the detector (19) are selectively delayed relative to one another.

11. Device according to any one of the preceding claims wherein the numerical aperture of the light path by which the primary light is irradiated into the object (13) is smaller than the numerical aperture of the light path by which the secondary light is detected.

## Revendications

1. Dispositif interférométrique à basse cohérence pour le balayage optique en profondeur d'un objet (13), positionné devant une ouverture de mesure (12) du dispositif, par détection de la position de points réémetteurs de lumière, qui sont localisés à différentes profondeurs de mesure à l'intérieur de l'objet (13) le long d'un trajet de balayage (19) s'étendant dans l'objet selon une direction de balayage (25),
comprenant un interféromètre à faible cohérence, qui comporte une source lumineuse (7) à faible cohérence, un séparateur de faisceaux (8), un réflecteur de référence (9) et un détecteur (10),
- les trajets lumineux entre les éléments de l'interféromètre (6) formant des bras interférométriques, à savoir un bras de source lumineuse (26) entre la source lumineuse (7) et le séparateur de faisceaux (8), un bras d'objet (27) entre le séparateur de faisceaux (8) et le point réémetteur de lumière (23) dans l'objet (13), un bras de référence (28) entre le séparateur de faisceaux (8) et le réflecteur de référence (9), et un bras de détection (29) entre le séparateur de faisceaux (8) et le détecteur (10),
- de la lumière de mesure étant irradiée dans l'objet (13) en tant que lumière primaire dans la direction de balayage, à travers le bras de source lumineuse (26) et le bras dpo'objet (27), et de la lumière réfléchie dans l'objet (13) au point réémetteur de lumière (23) étant dirigée vers le détecteur (10) en tant que lumière secondaire, à travers le bras d'objet (27) et du bras de détection (29),
- de la lumière de référence étant dirigée du séparateur de faisceaux (8) vers le réflecteur de référence (9) et de là, à travers le bras de référence (28) et le bras de détection (29) vers le détecteur (10), et
- la lumière de mesure et la lumière de référence étant réunies de sorte qu'elles produisent un signal d'interférence lors de l'impact sur le détecteur, lorsque coïncident la longueur de trajet optique du trajet de lumière de mesure constitué du bras de source lumineuse (26), du bras d'objet (27) et du bras de détection (29), et la longueur de trajet optique du trajet de lumière de référence constitué du bras de source lumineuse (26), du bras de référence (28) et du bras de détection (29),
dans lequel
l'interféromètre est un interféromètre en ligne à rayonnement libre (6) avec un séparateur de faisceaux (8) s'étendant transversalement à la direction de balayage (25), l'émetteur de lumière (7), le détecteur (10) et le miroir de référence (9) étant disposés sur le côté du séparateur de faisceaux opposé à l'ouverture de mesure,
le bras de source lumineuse (26) et le bras de référence (28) s'étendent sous un angle égal (α) par rapport à la surface du séparateur de faisceaux (8) tournée vers ces derniers, au moins dans leur section voisine du séparateur de faisceaux,
un objectif de balayage mobile (11) est disposé entre le séparateur de faisceaux (8) et l'ouverture de mesure (12), et
l'objectif de balayage mobile (11) et le séparateur de faisceaux (8) ont une orientation de même sens pour le balayage de profondeur et sont mobiles de manière synchrone avec l'émetteur de lumière (7), le détecteur (10) et le miroir de référence (9).

2. Dispositif selon la revendication 1, dans lequel l'objectif de balayage mobile (11) et le séparateur de faisceaux (8) sont reliés fixement entre eux et mobiles conjointement.

3. Dispositif selon l'une des revendications précédentes, dans lequel un objectif de détection (4) est disposé sur le côté du séparateur de faisceaux (8) opposé à l'ouverture de mesure (12).

4. Dispositif selon l'une des revendications précédentes, qui présente un objectif stationnaire (33) dans une position voisine de l'objectif de balayage (11).

5. Dispositif selon l'une des revendications précédentes, dans lequel l'émetteur de lumière (7) est réalisé de sorte qu'il émet de la lumière le long d'une ligne s'étendant perpendiculairement à la direction du faisceau.

6. Dispositif selon la revendication 5, dans lequel l'émetteur de lumière (7) est réalisé de sorte qu'il émet de la lumière sur une surface s'étendant perpendiculairement à la direction du faisceau.

7. Dispositif selon l'une des revendications précédentes, dans lequel le détecteur (10) présente une pluralité d'éléments photosensibles disposés le long d'une ligne.

8. Dispositif selon la revendication 7, dans lequel le détecteur (19) présente une pluralité d'éléments photosensibles (35) répartis en deux dimensions sur une surface.

9. Dispositif selon l'une des revendications 7 et 8, dans lequel les éléments photosensibles (35) sont disposés conjointement avec des éléments émetteurs de lumière dans un module combiné détecteur-émetteur de lumière.

10. Dispositif selon l'une des revendications 7 à 9, dans lequel il est prévu un circuit électronique de correction focale (44), par lequel les signaux des éléments photosensibles (35) du détecteur (19) sont retardés sélectivement les uns par rapport aux autres.

11. Dispositif selon l'une des revendications précédentes, dans lequel l'ouverture numérique du trajet lumineux sur lequel est irradiée la lumière primaire dans l'objet (13) est plus petite que l'ouverture numérique du trajet lumineux au travers duquel est détectée la lumière secondaire.
